# EUROPÄISCHE PATENTSCHRIFT

(11) **EP 1 296 585 B1**
(45) Veröffentlichungstag und Bekanntmachung des Hinweises auf die Patenterteilung: **08.06.2005**
(21) Anmeldenummer: 99971281.3
(22) Anmeldetag: 27.10.1999
(51) Int. Cl.: A47L 9/22

(54) **STAUBSAUGERGEBLÄSE**
VACUUM CLEANER FAN
SOUFFLANTE D'ASPIRATEUR

(30) Priorität: 31.10.1998 DE 19850236
(43) Veröffentlichungstag der Anmeldung: 02.04.2003
(73) Patentinhaber: Miele & Cie. KG, 33332 Gütersloh (DE)
(72) Erfinder: ESCH, Günter, D-53937 Schleiden (DE); RODE, Peter, D-53881 Euskirchen (DE); HEGEMANN, Hans-Joachim, D-53347 Alfter (DE)
(86) Internationale Anmeldenummer: PCT/EP1999/008099
(87) Internationale Veröffentlichungsnummer: WO 2000/025656

(56) Entgegenhaltungen:
- EP-A- 0 270 935
- DE-A- 1 563 028
- DE-A- 19 606 146
- US-A- 5 477 588

## Beschreibung

Der Gegenstand der Erfindung betrifft ein Staubsaugergebläse, bestehend aus einem elektrischen Antriebsmotor mit einem Lagertopf zur Aufnahme der Baumodule des Antriebsmotors, wie Statorpaket, Rotor und Bürstenhalter mit Kohlebürsten, sowie aus einer vom Motor angetriebenen mindestens einstufigen Gebläseeinheit mit Leitstufe, Laufrad und Ansaughaube, wobei die Leitstufe zugleich als Lagertopfdeckel mit Lagersitz für den Rotor ausgebildet ist.

Ein derartiges Staubsaugergebläse ist beispielsweise aus der DE-AS 15 63 028 bekannt.

Bei dem bekannten Technikstand ist ein aus Isolierwerkstoff gefertigter Lagertopf zur Aufnahme der elektrischen Baumodule des Motors, wie Statorpaket, Rotor und Bürstenhalter für die Kohlebürsten vorgesehen, der am Lagertopfboden einen Lagersitz für eines der beiden Rotorlager aufnimmt. Seitlich des Rotorlagers weist der Lagertopf zwei Bürstenhalter für die Kollektor-Kohlebürsten auf. In der Gehäuse- bzw. Lagertopfwandung sind ferner auch Ausnehmungen zur unmittelbaren Aufnahme von elektrischen Anschlußklemmen vorgesehen. Die dem Gebläse zugekehrte offene Topfseite des Lagertopfes ist als Zentrierrand für eine den Lagertopf abschließende Leitstufe ausgestaltet, welche das zweite Rotorlager trägt. Bei diesem Lagertopf bilden die im unteren Bereich des Gehäusetopfes vorgesehenen Bürstenhalter mit dem Kunststoff-Lagertopf ein gemeinsames Teil. Die quer zur Achse des Lagertopfes ausgerichteten Kohlebürsten des Rotors sind jedoch außerhalb des Lagertopfes zu kontaktieren und auch von außen her in die Bürstenhalter einzuschieben. Bei dem bekannten Sauggebläse ergibt sich somit der Montagenachteil, daß bei der Fertigung des Sauggebläses die Bestückungs- und Kontaktierungsrichtung mehrfach geändert werden muß. Ein kostengünstiger und vollautomatisch einfacher Fertigungs- bzw. Gebläsemontagelauf ist somit nicht durchführbar. So veranlaßt beispielsweise die beim bekannten Technikstand notwendige Befestigung des Statorpakets mittels von außen durch die Lagertopfwand hindurchgeführter Schrauben einen Richtungswechsel bei der Montage derart, daß das notwendige Montagewerkzeug nach außen umgesetzt werden muß, bevor der Rotor anschließend in der bevorzugten Montagelage und Bestückungsrichtung von oben her in den Lagertopf eingeführt werden kann. Dieser Nachteil besteht auch bei der Montage und Kontaktierung der Kohlebürsten.

Der Erfindung liegt die Aufgabe zugrunde, den Lagertopf so auszubilden, daß eine einfache kostengünstige Montage der verschiedenartigen Baumodule des Sauggebläses ohne Änderung der Bestückungsrichtung möglich ist und die Kontaktierung der elektrischen Motorverbindungen, wie Kohlebürsten, Wicklungsanschlüssen oder dergl. selbsttätig beim Montieren der Baumodule im Lagertopf erfolgt.

Erfindungsgemäß wird diese Aufgabe durch die im Patentanspruch 1 angegebenen Merkmale gelöst. Vorteilhafte Ausgestaltungen und Weiterbildungen der Erfindung ergeben sich aus den nachfolgenden Unteransprüchen.

Der mit der Erfindung erzielte wesentliche Vorteil ist darin zu sehen, daß alle wesentlichen für die Funktion des elektrischen Motoraggregats notwendigen Baumodule, wie Statorpaket, Rotor, Rotorlager sowie Bürstenhalter mit Kohlebürsten zur Komplettierung des Sauggebläses in einer bevorzugten Montage- oder Bestückungsrichtung ohne zusätzliche Befestigungselemente von der Lagertopfoberseite her vollautomatisch nacheinander in den Lagertopf lagegerecht eingesetzt und festgesetzt werden können. Bei der Montage erfolgt zugleich, ohne daß auch hier die Montagerichtung geändert werden muß, eine Direktkontaktierung der elektrischen Anschlüsse des Stators und des umlaufenden Rotors über die Kohlebürsten. Die erfindungsgemäße Ausbildung des Lagertopfes für die Anordnung und Unterbringung der Bürstenhalter der Kohlebürsten im Bereich der oberen Lagertopfseite, welche auch der Leitstufe zugekehrt ist, sowie die besondere Ausformung des Lagertopfes für den Stator mit Anschlüssen und die elektrische Kontaktierung unterstützen die vorteilhaft einfache Fertigung des Sauggebläses. Darüber hinaus ist es vorteilhaft möglich, auch für den Wicklungs-und/oder Motorschutz notwendige elektrische Bauelemente im Unterschied zum bekannten Technikstand innerhalb des Lagertopfes mit anzuordnen, wobei die Bestückung des Motors mit der Elektronik ebenfalls vollautomatisch in der bevorzugten Montage- oder Bestückungsrichtung erfolgen kann.

Ein Ausführungsbeispiel der Erfindung ist in den Zeichnungen rein schematisch dargestellt und wird nachfolgend näher beschrieben. Es zeigt
- Figur 1: ein Sauggebläse für einen Staubsauger in perspektivischer Darstellung,
- Figur 2: die Baumodule des Sauggebläses in der Reihenfolge ihrer Montage, in Explosivdarstellung,
- Figur 3: einen Lagertopf des Sauggebläses in perspektivischer Darstellung,
- Figur 4: den mit Statorpaket, Rotor und Bürstenhalter mit Kohlebürsten bestückten Lagertopf in perspektivischer Darstellung,

- Figur 5: den Lagertopf in perspektivischer Darstellung mit montierter Leitstufe der Gebläseeinheit,
- Figur 6: den Lagertopf in der Draufsicht mit einer separaten Aufnahmetasche am Lagertopfmantel für ein Adapter-Gehäuse zur Aufnahme einer Leiterkarte mit elektrischen Bauelementen für den Antriebsmotor des Sauggebläses,
- Figur 7: den Lagertopf in der Vorderansicht mit in Montagerichtung oberhalb der Aufnahmetasche angeordnetem Adapter-Gehäuse mit Leiterkarte,
- Figur 8: den Lagertopf in der Draufsicht gemäß Fig. 6, mit eingestecktem AdapterGehäuse,
- Figur 9: den Lagertopf von unten gesehen, in perspektivischer Darstellung,
- Figur 10: eine mit elektrischen Bauelementen bestückte Leiterkarte für das Adapter-Gehäuse in der Seitenansicht,
- Figur 11: das Adapter-Gehäuse im Längsschnitt.

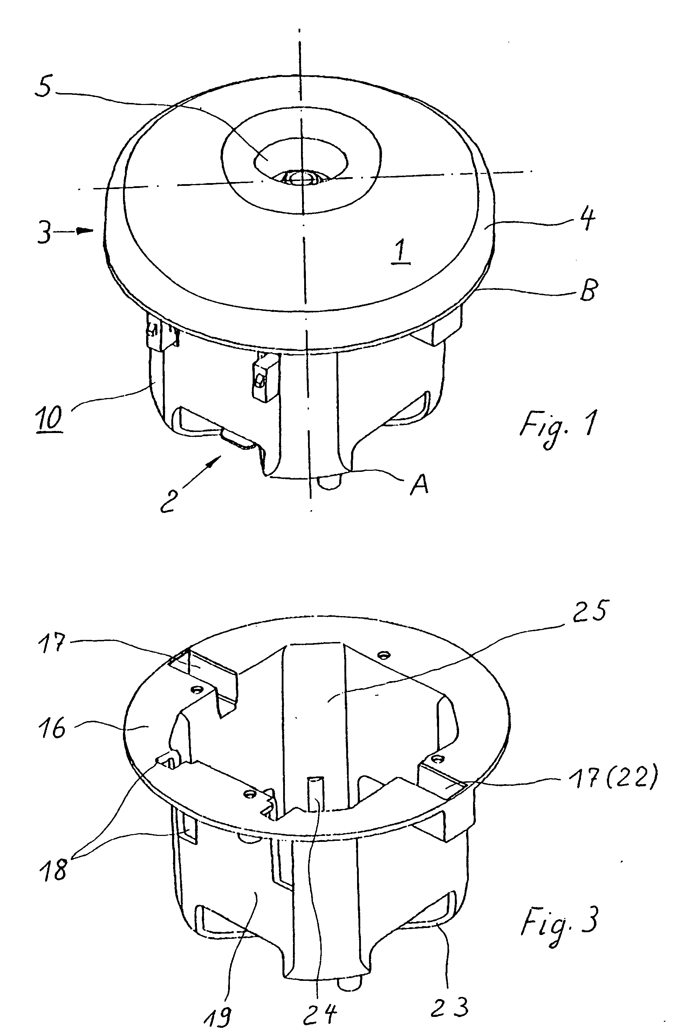

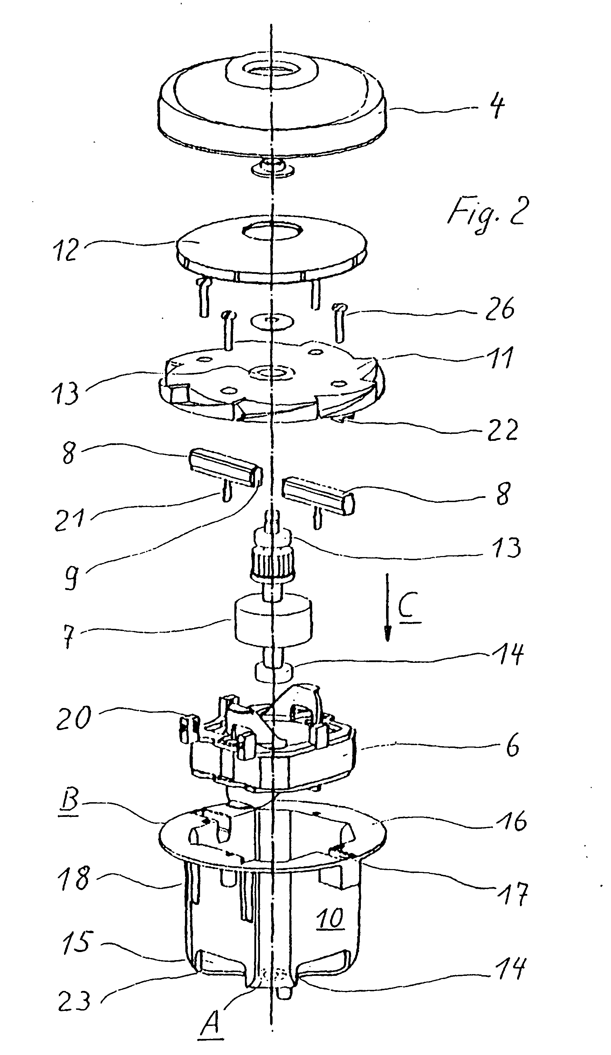

In Fig. 1 ist mit (1) ein Sauggebläse für einen Staubsauger (nicht gezeigt) dargestellt, wobei das Aggregat aus einem elektrischen Antriebsmotor (2) und einer vom Motor angetriebenen Gebläseeinheit (3) besteht. Die Gebläseeinheit (3) ist von einer Ansaughaube (4) abgedeckt, welche eine Ansaugöffnung (5) für den Saugluftstrom aufweist. Die angesaugte Luft durchsetzt den Antriebsmotor (2) und strömt rückseitig des Motors aus einem Lagertopf (10) wieder aus. Der Lagertopf (10) nimmt, wie in Fig. 2 gezeigt, die bekannten Baumodule des Antriebsmotors (2), wie das bewickelte Statorpaket (6), den Rotor (7) und die Bürstenhalter (8) mit Kohlebürsten (9) auf. Die Gebläseeinheit (3) ist einstufig ausgebildet und besteht aus einer unter der Ansaughaube (4) befindlichen Leitstufe (11) und einem Laufrad (12). Die Leitstufe (11) ist zugleich der Lagertopfdeckel des Antriebsmotors (2) und ist mit einem Lager bzw. Lagersitz 13 (Lagertopfseite B) für den Rotor (7) ausgebildet. Der andere Lagersitz (14) für den Rotor (7) ist im Topfboden (15) des Lagertopfes (10), sh. Fig.1, 2, 5; angeordnet und mit Lagertopfseite A definiert. Im dargestellten Beispiel ist der Lagersitz (14) in einem im Lagertopfboden (15) ausgeformten Lagerkreuz (23) angeordnet, welches die Saugluftausgänge für die durch den Motor geführte Gebläseluft realisiert. Selbstverständlich ist die Ausbildung als Lagerkreuz nicht zwingend. Hier kann für die Saugluftausgänge auch jede andere Gestaltung des Topfbodens vorgesehen werden, wie z. B. ein geschlossener Topfboden mit seitlich im Lagertopf ausgebildeten Luftschlitzen.

Die Fig. 2 zeigt die Baumodule des Sauggebläses (1) in der Reihenfolge ihrer Montage, in Explosivdarstellung. Dabei ist der Lagertopf (10) erfindungsgemäß für eine in Achsrichtung des Aggregats verlaufende Bestückungsrichtung (Pfeil C) seiner Baumodule sowie zur Direktkontaktierung ausgebildet. Die Bürstenhalter (8) der Kohlebürsten (9) sind hierfür im Bereich der oberen Lagertopfseite (B) vorgesehen, welche auch der Leitstufe (11) zugekehrt ist.

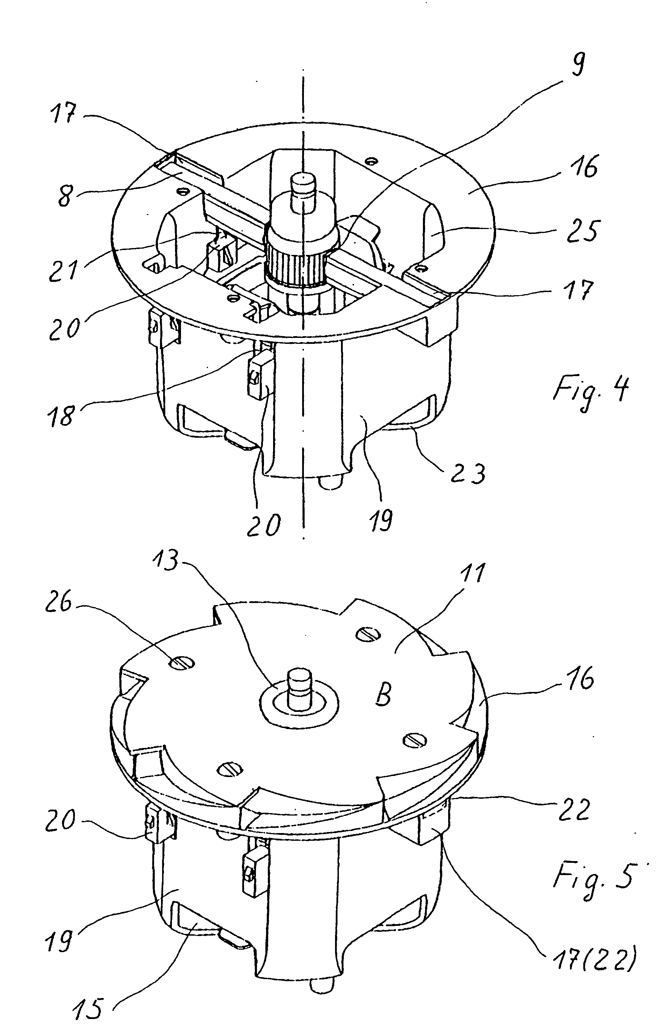

Der Lagertopf (10) auf seiner der Leitstufe (11) zugekehrten Seite mit einem den Topf überragenden Rand ausgebildet. Der so gebildete Randüberstand (16) weist eingeformte nach oben und zum Lagertopf (10) hin offene Aufnahmetaschen (17) auf, sh. Fig. 2 bis 5, in welche die Bürstenhalter (8) der Kohlebürsten (9) von oben her einlegbar sind. Zum anderen sind ferner Durchbrechungen (18) im Randüberstand (16) vorgesehen (Fig. 2 bis 4), die sich im Mantel (19) des Lagertopfes (10) fortsetzen. Hierdurch wird es möglich, auch das Statorpaket (6) mit seinen den Lagertopfmantel (19) überragenden Statorpaketanschlüssen (20), die nicht näher gezeigt mit der Steuerelektronik des Motors kontaktiert sind, von oben her auch ohne zusätzliche Befestigungselemente in den Lagertopf (10) einzusetzen. Mit dem Einsetzen der Bürstenhalter (8) wird zugleich durch Direktkontaktierung der Bürstenhalteranschlußstifte (21), Fig. 4, in die Statorpaketanschlüsse (20) die elektrische Leitungsverbindung zwischen dem Rotor (7) und dem Stator hergestellt.

Nach der Montage der Baumodule des Antriebmotors wird der Lagertopf (10) über die zugleich als Deckel oder Lagerschild für das zweite Rotorlager dienende Leitstufe (11) geschlossen und mit dieser zentriert und verschraubt. Zur gegenseitigen Ausrichtung von Lagertopf (10) und Leitstufe (11) sind im Randüberstand (16) des Lagertopfes (10) und im Randbereich an der Unterseite der Leitstufe (11) ein oder mehrere jeweils formschlüssig ineinandergreifende Zentrierhilfen (22) ausgebildet. Die Zentrierhilfen (22) können in Form von Zapfen, profilierter Vorsprünge, Bohrungen oder dergl. ausgebildet sein.

Besonders vorteilhaft ist es, die Zentrierhilfen (22) mit einem Profil, beispielsweise einem U-förmigen Profil, gemäß Fig. 2 u. 5 auszubilden, welches exakt formschlüssig in die Aufnahmetaschen (17) für die Bürstenhalter (8) im Lagertopf (10) eingreift. Hierdurch wird einerseits die Leitstufe (11) beim Zusammenbau des Sauggebläses (1) genau zentriert und andererseits werden die Bürstenhalter (8) mit den Kohlebürsten (9) sicher festgesetzt, so daß auch eine optimale Direktkontaktierung erfolgen kann. Solche Zentrierhilfen (22) in der zusätzlichen Funktion als Niederhalter für die Kohlebürsten (9) machen Schraubverbindungen daher überflüssig und vereinfachen die Montagearbeit.

Im Lagertopf (10) sind gemäß Fig. 3 u. 4 ferner Stützen (24) und/oder formschlüssig der Kontur des Statorpakets (6) folgende Aufnahmen (25) eingeformt, welche der sicheren Aufnahme und zum Halten des Stators dienen. Das durch die Luftauslässe im Lagertopfmantel (19) gebildete Lagerkreuz (23) am Lagertopfboden (15) nimmt das zweite Rotorlager (14) auf. Der Lagertopf (10) und die Leitstufe (11) jeweils als Träger für ein Rotorlager sind aus einem nicht metallischen Material, insbesondere aus Kunststoff gefertigt. Der isolierende Kunststoff ermöglicht das Einlegen der elektrisch leitenden Bürstenhalter (8) ohne zusätzliche Isolationsmaßnahmen.

Gemäß Fig. 2 erfolgt die Montage des Sauggebläses (1) in der vorgegebenen vorteilhaften Bestückungsrichtung (C) von oben her. Die Montage kann, da kein Wechsel in der Montagerichtung erfolgt, vollautomatisch erfolgen. Der Pfeil kennzeichnet diese Richtung, in welcher die einzelnen Baumodule des Gebläses in den einzelnen Montageschritten nacheinander zusammengefügt werden. Dabei wird zunächst so vorgegangen, daß in den Topfboden (15) des Lagertopfes (10) zuerst eine nicht näher gezeigte Kugellagerausgleichscheibe im Lagersitz (14) montiert wird. Anschließend wird das Statorpaket (6) in den Topf eingesetzt, und in diesem durch die Stützanschläge (Fig. 3) sowie durch die dem Statorpaket (6) in der Kontur angepaßte Innenausformung des Lagertopfes (10) formschlüssig gehalten und zentriert. Nachdem das bewickelte Statorpaket (6) eingesetzt ist, wird der Rotor eingefügt und anschließend erfolgt die Montage der Bürstenhalter (8) mit den Kohlebürsten (9), wobei sich die elektrisch isoliert in den Aufnahmetaschen (17) des Kunststoff-Lagertopfes (10) eingelegten Bürstenhalter (8) direkt über die Bürstenhalter-Anschlußkontakte (21) mit den Statorpaketanschlüssen (20) kontaktieren. Hierdurch ist bereits beim Einsetzen der Bürstenhalter (8) die elektrische Leitungsverbindung zwischen dem Rotor (7) und dem Stator hergestellt. Danach wird die Leitstufe (11) als abschließendes Teil des Lagertopfes (10) montiert und durch eine Schraubverbindung (26) mit dem Lagertopf (10) gesichert. Die Leitstufe (11) ist am Randüberstand (16) zentriert befestigt ist. Bei diesem Zusammenschluß werden die Baumodule des Antriebsmotors (2) automatisch zentriert und im Topf festgesetzt, wobei auch die Direktkontaktierung gesichert ist. Die Leitstufe (11) mit integriertem Lagersitz (13) nimmt dabei das zweite Rotorlager auf. Danach erfolgt die Montage des Laufrades (12) und der Ansaughaube, welche am Lagertopf (10) gehalten die Gebläseeinheit (3) nach außen hin abschließt. Auch bei dieser Montage kann die in Achsrichtung des Sauggebläses (1) verlaufende Bestückungsrichtung (C), Fig. 2, beibehalten werden.

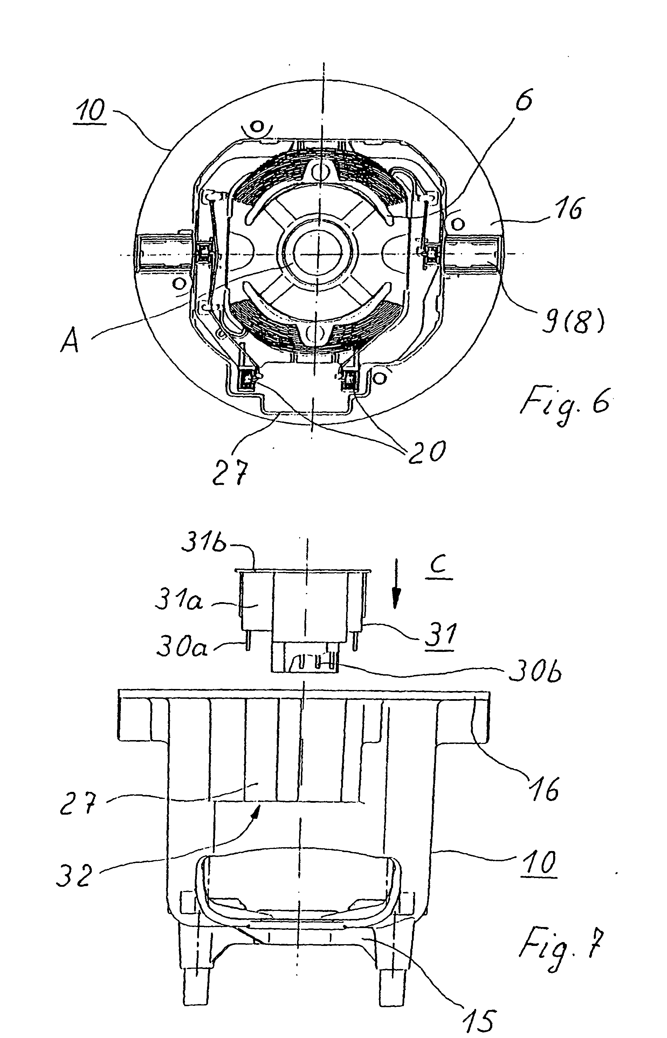

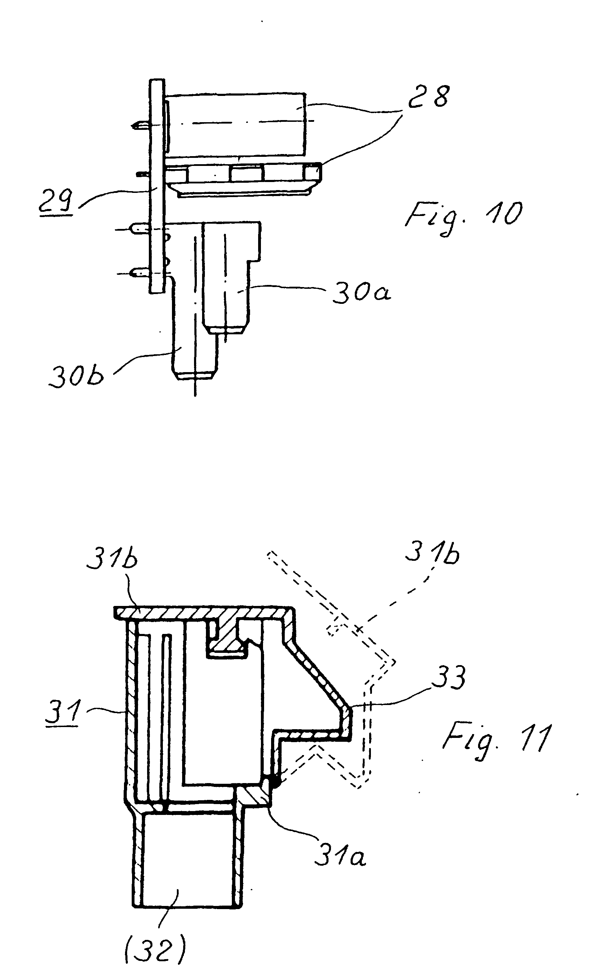

Durch die besondere Ausbildung des Lagertopfes (10) mit dem Randüberstand (16) ist es wieiterhin vorteilhaft möglich, für den Sauggebläse-Antriebsmotors (2) notwendige elektrische Schalt-, Steuer- und/oder Sicherheitsfunktionen durch die Anordnung elektrischer Bauelemente innerhalb des Lagertopfes (10) zu realisieren. Für die Aufnahme der elektrischen Bauelemente (28) ist mindestens eine weitere zum Inneren des Lagertopfes (10) hin offene Aufnahmetasche (27), sh. Fig. 6 bis 9, im Randüberstand (16) des Lagertopfes (10) vorgesehen. Die elektrischen Bauelemente (28) sind auf einer Leiterkarte (29) oder Platine angeordnet, welche vorzugsweise auch die Anschlußstifte (30a, 30b) zur Direktkontaktierung trägt. Siehe hierzu Fig. 10.

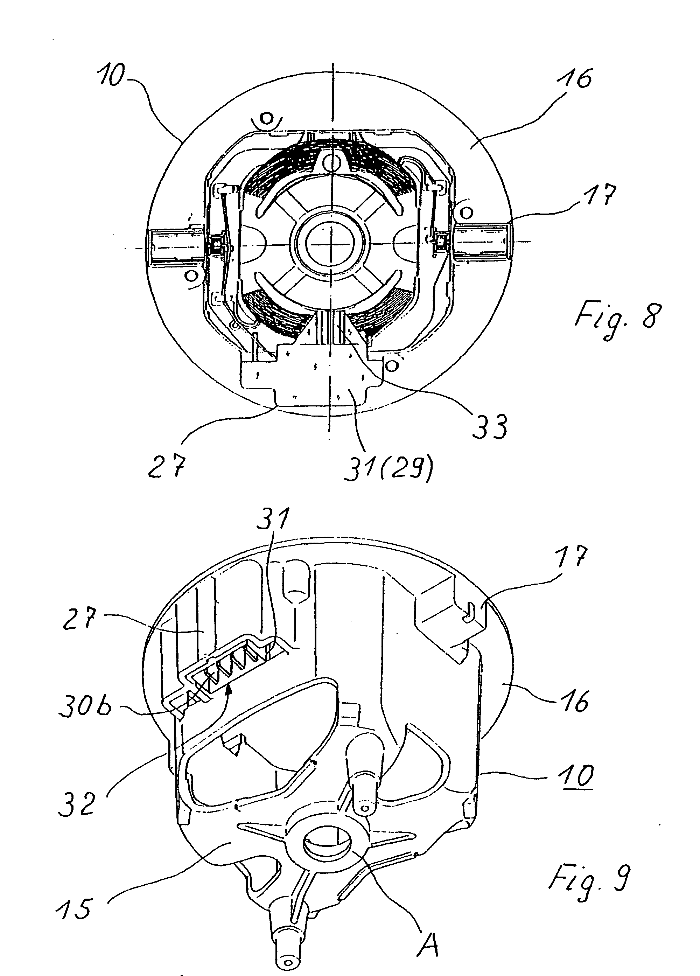

In die vorgesehene Aufnahmetasche (27) wird bei der Montage die Leiterkarte (29) separat eingesteckt, oder eine solche Leiterkarte (29) wird, wie im Ausführungsbeispiel vorgesehen, in ein separates Adapter-Gehäuse (31), sh. Fig. 7, 8, 11, eingefügt, welches seinerseits in die Aufnahmetasche (27) gesteckt wird. Die im Lagertopfmantel gemäß Fig. 9 ausgeformte Aufnahmetasche (27) ist unterseitig mit einer Steckeröffnung (32) für einen externen Netz-Steckeranschluß versehen. Die Steckeröffnung (32) durchsetzt den Mantel (19) des Lagertopfes (10) in Achsrichtung.

Das Adapter-Gehäuse (31) mit komplettierter Leiterkarte (29) oder die Leiterkarte selbst ist mit den schon genannten Anschlußstiften (30a, 30b) versehen, welche in Achsrichtung des Lagertopfes (10) zur Direktkontaktierung ausgerichtet sind. Vorzugsweise sind die Anschlußstifte (30a, 30b) an der Leiterkarte (29) vorgesehen. Die mit (30b) bezeichneten Anschlußstifte werden nach der Gebläsemontage für den externen Netz-Steckeranschluß benötigt.

Bei der Montage des Adapters (Bestückungsrichtung C) kontaktieren erste Anschlußstifte (30a) des Adapter-Gehäuses (31) bzw. der Leiterkarte (29) zugeordnete Statorpaketanschlüsse (20). Die weiteren Anschlußstifte (30b) für den externen Steckeranschluß tauchen frei in die Steckeröffnung (32) ein. Die Montage des Adapter-Gehäuses (31) mit zugeordneter Leiterkarte (29) erfolgt vorzugsweise nach dem Einsetzen des Stators (6) in den Lagertopf (10).

Das Adapter-Gehäuse (31) mit den elektrischen Bauelementen (28) auf der Leiterkarte (29) ist formschlüssig in die Aufnahmetasche (27) einsetzbar. Im einfachsten Fall umfassen die elektrischen Bauteile (28) auf der Leiterkarte (29) einen Entstörkondensator für den Sauggebläse-Antriebsmotor (2) sowie einen Thermoschalter für den Wicklungs- und/oder Motorschutz. Es ist aber auch möglich, ggf. zur Drehzahlsteuerung notwendige elektrische Leistungssteller/schalter mit vorzusehen, oder diese in einer weiteren Aufnahmetasche anzuordnen.

Am Adapter-Gehäuse (31) ist nach Fig. 8 und 11 ein Niederhalter (33) für das Statorpaket (6) angeformt, welcher gemäß Fig. 8 das montierten Statorpaket (6) bei aufgeschraubter Leitstufe (11) im Lager niederdrückt und festhält. Das Statorpaket (6) wird durch den aufliegenden Adapter somit von oben gegen ein Verschieben in achsialer Richtung gesichert. Das Adapter-Gehäuse (31) besteht gemäß Fig. 11 aus einem die Leiterkarte (29) aufnehmenden Gehäuseunterteil (31a) und einem am Gehäuseunterteil (31a) angelenkten Deckelteil (31b), welches bei montiertem Adapter mit dem Randüberstand (16) flächenbündig ist und formschlüssig in der Aufnahmetasche (27) sitzt. Das Deckelteil (31 b) ist filmscharnierartig am Gehäuseunterteil (31a) angelenkt.

Auch für die Adaption des Lagertopfes mit der für den Wicklungs-und/oder Motorschutz notwendige elektrische Bauelemente kann die bevorzugte vollautomatische Montage- oder Bestückungsrichtung des Sauggebläses beibehalten werden.

## Patentansprüche

1. Staubsaugergebläse (1), das aus einem elektrischen Antriebsmotor (2) mit einem Lagertopf (10) zur Aufnahme der Baumodule des Antriebsmotors (2), die ein Statorpaket (6), ein Rotor (7) und Bürstenhalter (8) mit Kohlebürsten (9) aufweisen, sowie aus einer vom Motor angetriebenen mindestens einstufigen Gebläseeinheit mit Leitstufe (11), Laufrad (12) und Ansaughaube (4) besteht, wobei die Leitstufe (11) zugleich als Lagertopfdeckel mit Lagersitz für den Rotor (7) ausgebildet ist,
**dadurch gekennzeichnet,**
**daß** der Lagertopf (10) für eine in Achsrichtung des Gebläses verlaufende Bestückungsrichtung (C) seiner Baumodule sowie zur Direktkontaktierung ausgebildet ist, wobei die Bürstenhalter (8) der Kohlebürsten (9) im Bereich der oberen Lagertopfseite (B) vorgesehen sind, welche auch der Leitstufe (11) zugekehrt ist.

2. Staubsaugergebläse nach Anspruch 1,
**dadurch gekennzeichnet,**
**daß** der Lagertopf (10) auf seiner der Leitstufe (11) zugekehrten Seite mit einem den Topf überragenden Rand (16) ausgebildet ist, daß der Randüberstand (16) eingeformte nach oben und zum Inneren des Lagertopfes (10) hin offene Aufnahmetaschen (17; 27) zumindest für die Bürstenhalter (8) der Kohlebürsten (9) aufweist.

3. Staubsaugergebläse nach Anspruch 2,
**dadurch gekennzeichnet,**
**daß** Durchbrechungen (18) im Randüberstand (16) des Lagertopfes (10) sich im Mantel (19) des Topfes (10) zur Aufnahme überstehender Statorpaketanschlüsse (20) fortsetzen.

4. Staubsaugergebläse nach Anspruch 3,
**dadurch gekennzeichnet, daß** die Statorpaketanschlüsse (20) mit den Kohlebürsten (9) direkt kontaktiert sind.

5. Staubsaugergebläse nach Anspruch 4,
**dadurch gekennzeichnet,**
**daß** die Bürstenhalter (8) der Kohlebürsten (9) mit in Achsrichtung des Lagertopfes (10) ausgerichteten Bürstenhalteranschlußstiften (21) versehen sind, welche beim Einlegen der Kohlebürsten (9) in die Aufnahmetaschen (17) die zugeordneten Statorpaketanschlüsse (20) kontaktieren.

6. Staubsaugergebläse nach Anspruch 2,
**dadurch gekennzeichnet,**
**daß** im Randüberstand (16) des Lagertopfes (10) mindestens eine weitere Aufnahmetasche (27) für eine aus elektrischen Bauelementen (28) bestehende einsteckbare Baugruppe für Schalt-, Steuer- und/oder Sicherheitsfunktionen des Sauggebläse-Antriebsmotors (2) ausgebildet ist.

7. Staubsaugergebläse nach Anspruch 6,
**dadurch gekennzeichnet,**
**daß** die elektrischen Bauelemente (28) auf einer in die Aufnahmetasche (27) einsteckbaren Leiterkarte (29) angeordnet sind, und daß die Statorpaketanschlüsse (20) beim Einsetzen der Leiterkarte (29) direkt mit dieser kontaktierbar sind.

8. Staubsaugergebläse nach Anspruch 7,
**dadurch gekennzeichnet,**
**daß** die Leiterkarte (29) in ein Adapter-Gehäuse (31) einfügt ist, welches seinerseits separat in die Aufnahmetasche (27) einsteckbar ausgebildet ist.

9. Staubsaugergebläse nach Anspruch 8,
**dadurch gekennzeichnet,**
**daß** die Aufnahmetasche (27) unterseitig für einen externen Steckeranschluß mit einer Steckeröffnung (32) versehen ist, welche den Mantel (19) des Lagertopfes (10) durchsetzt.

10. Staubsaugergebläse nach Anspruch 8,
**dadurch gekennzeichnet,**
**daß** das Adapter-Gehäuse (31) mit komplettierter Leiterkarte (29) oder die Leiterkarte (29) selbst mit in Achsrichtung des Lagertopfes (10) ausgerichteten Anschlußstiften (30a; 30b) zur Direktkontaktierung versehen ist.

11. Staubsaugergebläse nach Anspruch 10,
**dadurch gekennzeichnet,**
**daß** Anschlußstifte (30a) des Adapter-Gehäuses (31) bzw. der Leiterkarte (29) beim Einfügen in die Aufnahmetasche (27) zugeordnete Statorpaketanschlüsse (20) kontaktieren und weiteren Anschlußstifte (30b) für den externen Steckeranschluß frei in die Steckeröffnung (32) eintauchen.

12. Staubsaugergebläse nach Anspruch 8,
**dadurch gekennzeichnet,**
**daß** das Adapter-Gehäuse (31) formschlüssig in die Aufnahmetasche (27) einsetzbar ist.

13. Staubsaugergebläse nach Anspruch 7,
**dadurch gekennzeichnet,**
**daß** die elektrischen Bauteile (28) auf der Leiterkarte (29) einen Entstörkondensator und einen Thermoschalter für den Sauggebläse-Antriebsmotor (2) umfassen.

14. Staubsaugergebläse nach Anspruch 8,
**dadurch gekennzeichnet,**
**daß** am Adapter-Gehäuse (31) ein Niederhalter (33) für das Statorpaket (6) angeformt ist.

15. Staubsaugergebläse nach Anspruch 8,
**dadurch gekennzeichnet,**
**daß** das Adapter-Gehäuse (31) aus einem die Leiterkarte (29) aufnehmenden Gehäuseunterteil (31a) und einem am Gehäuseunterteil (31a) angelenkten Deckelteil (31b) besteht.

16. Staubsaugergebläse nach Anspruch 15,
**dadurch gekennzeichnet,**
**daß** das Deckelteil (31 b) filmscharnierartig mit dem Gehäuseunterteil (31 a) verbunden ist.

17. Staubsaugergebläse nach Anspruch 2,
**dadurch gekennzeichnet,**
**daß** die Leitstufe (11) am Randüberstand (16) zentriert befestigt ist.

18. Staubsaugergebläse nach Anspruch 2,
**dadurch gekennzeichnet,**
**daß** zur gegenseitigen Ausrichtung von Lagertopf (10) und Leitstufe (11) im Randüberstand (16) des Lagertopfes (10) und im Randbereich an der Unterseite der Leitstufe (11) ein oder mehrere jeweils formschlüssig ineinandergreifende Zentrierhilfen (22) ausgebildet sind.

19. Staubsaugergebläse nach Anspruch 18,
**dadurch gekennzeichnet,**
**daß** die Zentrierhilfen (22) in Form von Zapfen, profilierter Vorsprünge, Bohrungen oder dergl. ausgebildet sind.

20. Staubsaugergebläse nach Anspruch 18,
**dadurch gekennzeichnet,**
**daß** den Zentrierhilfen (22) an der Unterseite der Leitstufe (11) die Bürstenhalter-Aufnahmetaschen (17) des Lagertopfes (10) als Zentriergegenstücke dienen.

21. Staubsaugergebläse nach Anspruch 18,
**dadurch gekennzeichnet,**
**daß** die Zentrierhilfen (22) als Niederhalter für die Bürstenhalter (8) ausgebildet sind.

22. Staubsaugergebläse nach Anspruch 18,
**dadurch gekennzeichnet,**
**daß** die Zentrierhilfen (22) als Niederhalter U-Profil aufweisen.

23. Staubsaugergebläse nach einem oder mehreren der Ansprüche 1 bis 22,
**dadurch gekennzeichnet,**
**daß** das bewickelte Statorpaket (6) im Lagertopf (10) formschlüssig festgesetzt ist.

24. Staubsaugergebläse nach einem oder mehreren der Ansprüche 1 bis 23,
**dadurch gekennzeichnet,**
**daß** der Lagertopf (10) mit Anlagestützen (24) und/oder formschlüssig der Statorkontur folgenden Aufnahmen (25) für das Statorpakets (6) ausgebildet ist.

25. Staubsaugergebläse nach einem oder mehreren der Ansprüche 1 bis 24,
**dadurch gekennzeichnet,**
**daß** der Lagertopf (10) mit einem Saugluftausgänge realisierenden Lagertopfboden (15) zur Aufnahme eines Rotorlagers ausgebildet ist.

26. Staubsaugergebläse nach einem oder mehreren der Ansprüche 1 bis 25,
**dadurch gekennzeichnet,**
**daß** zumindest der Lagertopf (10) und die Leitstufe (11) aus einem nicht metallischen Material, insbesondere aus Kunststoff gefertigt sind.

## Claims

1. Vacuum cleaner fan (1), which comprises an electric drive motor (2) with a bearing container (10) for accommodating the construction modules of the drive motor (2), which include stator plates (6), a rotor (7) and brush holders (8) with carbon brushes (9), said vacuum cleaner fan also comprising an at least one-stage fan unit driven by the motor with stator stage (11), impeller (12) and intake cover (4), wherein the stator stage (11) is at the same time the bearing container cover with bearing seat for the rotor (7), **characterised in that** the bearing container (10) is configured so that its construction modules extend in the direction (C) of the axis of the fan and have direct contact, wherein the brush holders (8) of the carbon brushes (9) are provided in the region of the top side (B) of the bearing container, which is also facing the stator stage (11).

2. Vacuum cleaner fan according to claim 1, **characterised in that** the bearing container (10), on its side facing the stator stage (11), is configured with an edge (16) which protrudes from the container, **in that** the edge protrusion (16) includes integrally moulded receiving pockets (17; 27) which are open upwards and towards the interior of the bearing container (10), at least for the brush holders (8) of the carbon brushes (9).

3. Vacuum cleaner fan according to claim 2, **characterised in that** openings (18) in the edge protrusion (16) of the bearing container (10) continue in the shell (19) of the container (10) for accommodating protruding stator plate connections (20).

4. Vacuum cleaner fan according to claim 3, **characterised in that** the stator plate connections (20) are in direct contact with the carbon brushes (9).

5. Vacuum cleaner fan according to claim 4, **characterised in that** the brush holders (8) of the carbon brushes (9) are provided with brush holder terminal pins (21), which are orientated in the direction of the axis of the bearing container (10), said terminal pins contacting the associated stator plate connections (20) when the carbon brushes (9) are inserted into the receiving pockets (17).

6. Vacuum cleaner fan according to claim 2, **characterised in that** in the edge protrusion (16) of the bearing container (10), there is at least one additional receiving pocket (27) for a pluggable assembly comprising electrical components (28) for switching, controlling and/or safety functions of the suction fan drive motor (2).

7. Vacuum cleaner fan according to claim 6, **characterised in that** the electrical components (28) are disposed on a printed circuit board (29) which can be plugged into the receiving pocket (27), and **in that** the stator plate connections (20) are directly contactable with said electrical components when the printed circuit board (29) is inserted.

8. Vacuum cleaner fan according to claim 7, **characterised in that** the printed circuit board (29) is fitted into an adapter housing (31), which, in its turn, is configured so as to be separately insertable into the receiving pocket (27).

9. Vacuum cleaner fan according to claim 8, **characterised in that** the receiving pocket (27) is provided with a plug opening (32) at the bottom for an external plug connection and this plug opening passes through the shell (19) of the bearing container (10).

10. Vacuum cleaner fan according to claim 8, **characterised in that** the adapter housing (31) is provided with a completed printed circuit board (29) or the printed circuit board (29) itself is provided with terminal pins (30a; 30b), orientated in the direction of the axis of the bearing container (10), for direct contact.

11. Vacuum cleaner fan according to claim 10, **characterised in that** terminal pins (30a) of the adapter housing (31) or respectively of the printed circuit board (29) contact associated stator plate connections (20) when they are inserted into the receiving pocket (27) and additional terminal pins (30b) for the external plug connection enter freely into the plug opening (32).

12. Vacuum cleaner fan according to claim 8, **characterised in that** the adapter housing (31) is insertable into the receiving pocket (27) in a form-locking manner.

13. Vacuum cleaner fan according to claim 7, **characterised in that** the electrical components (28) on the printed circuit board (29) include a capacitive suppressor and a thermostatic switch for the suction fan drive motor (2).

14. Vacuum cleaner fan according to claim 8, **characterised in that** a holding down device (33) for the stator plates (6) is integrally formed on the adapter housing (31).

15. Vacuum cleaner fan according to claim 8, **characterised in that** the adapter housing (31) comprises a housing bottom part (31 a), which accommodates the printed circuit board (29), and a cover part (31b), which is hinge-connected to the housing bottom part (31 a).

16. Vacuum cleaner fan according to claim 15, **characterised in that** the cover part (31 b) is connected to the housing bottom part (31a) with a film hinge.

17. Vacuum cleaner fan according to claim 2, **characterised in that** the stator stage (11) is secured to the edge projection (16) in a centred manner.

18. Vacuum cleaner fan according to claim 2, **characterised in that** one or more centring aids (22), each of which intermesh in a form-locking manner, are configured for the mutual alignment of bearing container (10) and stator stage (11) in the edge protrusion (16) of the bearing container (10) and in the edge region on the bottom of the stator stage (11).

19. Vacuum cleaner fan according to claim 18, **characterised in that** the centring aids (22) are in the form of journals, profiled projections, bores or similar.

20. Vacuum cleaner fan according to claim 18, **characterised in that** the brush holder receiving pockets (17) of the bearing container (10) serve the centring aids (22) as centring counter parts.

21. Vacuum cleaner fan according to claim 18, **characterised in that** the centring aids (22) are in the form of holding down devices for the brush holders (8).

22. Vacuum cleaner fan according to claim 18, **characterised in that** the centring aids (22) have a U-profile as a holding down device.

23. Vacuum cleaner fan according to one or more of claims 1 to 22, **characterised in that** the wound stator plates (6) are fixed in the bearing container (10) in a form-fitting manner.

24. Vacuum cleaner fan according to one or more of claims 1 to 23, **characterised in that** the bearing container (10) is configured with contact supports (24) and/or receptacles (25) following the outline of the stator in a form-fitting manner for the stator plates (6).

25. Vacuum cleaner fan according to one or more of the claims 1 to 24, **characterised in that**, for accommodating a rotor bearing, the bearing container (10) is configured with a bearing container floor (15), which provides suction air outlets.

26. Vacuum cleaner fan according to one or more of claims 1 to 25, **characterised in that** at least the bearing container (10) and the stator stage (11) are produced from a non-metallic material, more especially from plastics material.

## Revendications

1. Soufflante d'aspirateur (1) qui se compose d'un moteur d'entraînement électrique (2) avec un pot de roulement (10) contenant les modules du moteur d'entraînement (2), qui comprennent un stator (6), un rotor (7) et un porte-balais (8) avec des balais de charbon (9), ainsi qu'une unité de soufflante à au moins une vitesse ou au moins un étage entraînée par le moteur avec étage directeur (11), roue mobile (12) et capot d'aspiration (4), l'étage directeur (11) étant conçu en même temps comme couvercle de pot de roulement avec siège de roulement pour le rotor (7),
**caractérisée par le fait**
**que** le pot de roulement (10) est conçu pour un sens d'équipement (C) de ses modules allant dans la direction de l'axe de la soufflante ainsi que pour la connexion directe, les porte-balais (8) des balais de charbon (9) étant prévus dans la zone du côté supérieur du pot de roulement (B), lequel est aussi tourné vers l'étage directeur (11).

2. Soufflante d'aspirateur selon la revendication 1,
**caractérisée par le fait**
**que** le pot de roulement (10) est formé de son côté tourné vers l'étage directeur (11) avec un bord (16) dépassant le pot, que le dépassement du bord (16) présente des logements de réception (17 ; 27) moulés, ouverts vers le haut et vers l'intérieur du pot de roulement (10), au moins pour les porte-balais (8) des balais de charbon (9).

3. Soufflante d'aspirateur selon la revendication 2,
**caractérisée par le fait**
**que** des ouvertures (18) dans le dépassement du bord (16) du pot de roulement (10) se poursuivent dans le corps du pot (10) pour recevoir des connexions de stator (20) en saillie.

4. Soufflante d'aspirateur selon la revendication 3,
**caractérisée par le fait que** les connexions de stator (20) sont directement connectées avec les balais de charbon (9).

5. Soufflante d'aspirateur selon la revendication 4,
**caractérisée par le fait**
**que** les porte-balais (8) des balais de charbon (9) sont munis de broches de connexions de porte-balais (21) qui connectent les connexions de stator (20) correspondantes lors de la mise en place des balais de charbon (9) dans les logements de réception (17).

6. Soufflante d'aspirateur selon la revendication 2,
**caractérisée par le fait**
**qu'**il est formé dans le dépassement du bord (16) du pot de roulement (10) au moins un autre logement de réception (27) pour un ensemble enfichable constitué de composants électriques (28) pour des fonctions de commutation, de commande et/ou de sécurité du moteur d'entraînement (2) de la soufflante d'aspiration.

7. Soufflante d'aspirateur selon la revendication 6,
**caractérisée par le fait**
**que** les composants électriques (28) sont disposés sur une carte de circuits imprimés (29) enfichable dans le logement de réception (27) et que les connexions de stator (20) sont directement connectables avec celle-ci lors de la mise en place de la carte de circuits imprimés (29).

8. Soufflante d'aspirateur selon la revendication 7,
**caractérisée par le fait**
**que** la carte de circuits imprimés (29) est insérée dans un boîtier adaptateur (31), lequel est lui-même conçu de façon à pouvoir être enfiché séparément dans le logement de réception (27).

9. Soufflante d'aspirateur selon la revendication 8,
**caractérisée par le fait**
**que** le logement de réception (27) est muni sur sa face inférieure d'une ouverture de connexion (32) qui traverse le corps (19) du pot de roulement (10) pour le raccordement d'une fiche externe.

10. Soufflante d'aspirateur selon la revendication 8,
**caractérisée par le fait**
**que** le boîtier adaptateur (31) avec carte de circuits imprimés (29) complétée ou la carte de circuits imprimés (29) elle-même est muni(e) de broches de raccordement (30a ; 30b) dirigées en direction de l'axe du pot de roulement (10) pour la connexion directe.

11. Soufflante d'aspirateur selon la revendication 10,
**caractérisée par le fait**
**que** les broches de raccordement (30a) du boîtier adaptateur (31) ou de la carte de circuits imprimés (29) connectent des connexions de stator (20) correspondantes lors de l'insertion dans le logement de réception (27) et que les autres broches de raccordement (30b) plongent librement dans l'ouverture de connexion (32) pour le raccordement d'une fiche externe.

12. Soufflante d'aspirateur selon la revendication 8,
**caractérisée par le fait**
**que** le boîtier adaptateur (31) peut être mis en place avec autoblocage dans le logement de réception (27).

13. Soufflante d'aspirateur selon la revendication 7,
**caractérisée par le fait**
**que** les composants électriques (28) sur la carte de circuits imprimés (29) comprennent un condensateur d'antiparasitage et un thermocontact pour le moteur d'entraînement (2) de la soufflante d'aspiration.

14. Soufflante d'aspirateur selon la revendication 8,
**caractérisée par le fait**
**qu'**un dispositif de maintien (33) pour le stator (6) est formé sur le boîtier adaptateur (31).

15. Soufflante d'aspirateur selon la revendication 8,
**caractérisée par le fait**
**que** le boîtier adaptateur (31) se compose d'une partie inférieure de boîtier (31a) recevant la carte de circuits imprimés (29) et d'une partie couvercle (3 1 b) articulée sur la partie inférieure de boîtier (31a).

16. Soufflante d'aspirateur selon la revendication 15,
**caractérisée par le fait**
**que** la partie couvercle (31b) est reliée à la partie inférieure de boîtier (31a) par une charnière film.

17. Soufflante d'aspirateur selon la revendication 2,
**caractérisée par le fait**
**que** l'étage directeur (11) est fixé en position centrée sur le dépassement du bord (16).

18. Soufflante d'aspirateur selon la revendication 2,
**caractérisée par le fait**
**qu'**une ou plusieurs aides au centrage (22) s'encliquetant avec autoblocage sont formées dans le dépassement du bord (16) du pot de roulement (10) et sur le bord de la face inférieure de l'étage directeur (11) pour l'alignement mutuel du pot de roulement (10) et de l'étage directeur (11).

19. Soufflante d'aspirateur selon la revendication 18,
**caractérisée par le fait que** les aides au centrage (22) sont réalisées sous la forme de tenons, de saillies profilées, de perçages ou analogues.

20. Soufflante d'aspirateur selon la revendication 18,
**caractérisée par le fait**
**que** les logements de réception (17) de porte-balais du pot de roulement (10) servent de contrepartie de centrage aux aides au centrage (22) situées sur la face inférieure de l'étage directeur (11).

21. Soufflante d'aspirateur selon la revendication 18,
**caractérisée par le fait**
**que** les aides au centrage (22) servent de dispositifs de maintien pour les porte-balais (8).

22. Soufflante d'aspirateur selon la revendication 18,
**caractérisée par le fait**
**que** les aides au centrage (22) servant de dispositifs de maintien présentent un profil en U.

23. Soufflante d'aspirateur selon l'une ou plusieurs des revendications 1 à 22,
**caractérisée par le fait**
**que** le stator (6) bobiné est serré avec autoblocage dans le pot de roulement (10).

24. Soufflante d'aspirateur selon l'une ou plusieurs des revendications 1 à 23,
**caractérisée par le fait**
**que** le pot de roulement (10) est formé avec des jambes d'appui (24) et/ou des supports (25) suivant le contour du stator avec autoblocage pour le stator (6).

25. Soufflante d'aspirateur selon l'une ou plusieurs des revendications 1 à 24,
**caractérisée par le fait que** le pot de roulement (10) est formé avec un fond de pot de roulement (15) réalisant des sorties d'air aspiré pour recevoir un roulement de rotor.

26. Soufflante d'aspirateur selon l'une ou plusieurs des revendications 1 à 25,
**caractérisée par le fait**
**qu'**au moins le pot de roulement (10) et l'étage directeur (11) sont réalisés dans un matériau non métallique, en particulier en matière plastique.
